# EUROPEAN PATENT APPLICATION

(11) **EP 4 559 736 A1**
(43) Date of publication of application: **28.05.2025**
(21) Application number: 23212044.4
(22) Date of filing: 24.11.2023
(51) Int. Cl.: B60L 58/12

(54) **PROVIDING A HANDLING OPERATION RECOMMENDATION FOR AN ELECTRIC MATERIAL HANDLING MACHINE**

(71) Applicant: Volvo Penta Corporation, 405 08 Göteborg (SE)
(72) Inventor: JANSSON, Klara, 417 12 GÖTEBORG (SE)
(74) Representative: Ström & Gulliksson AB

(57) **Abstract**

A computer system (100) for providing a handling operation recommendation (118) for an electric material handling machine (10), the computer system (100) comprising processing circuitry (102) configured to: obtain container-related data (110) of a plurality of containers (30) located at a site (20); obtain battery attributes (112) of the electric material handling machine (10); determine handling operations (114) operable by the electric material handling machine (10) with respect to the plurality of containers (30) based on the container-related data (110); determine energy management data (116) based on the battery attributes (112) and the handling operations (114); and provide a handling operation recommendation (118) for the electric material handling machine (10) based on the energy management data (116).

## Description

### TECHNICAL FIELD

The disclosure relates generally to vehicle energy management. In particular aspects, the disclosure relates to providing a handling operation recommendation for an electric material handling machine. The disclosure can be applied to electrical industrial vehicles, such as an electrical material handling machine, an electrical forklift, an electrical aerial work platform, an electrical pallet jack, an electrical tugger, an electrical automated guided vehicle, and electrical tractor, among other vehicle types. Although the disclosure may be described with respect to a particular vehicle, the disclosure is not restricted to any particular vehicle.

### BACKGROUND

Electrical industrial vehicles, such as electric material handling machines, are widely employed for material management and transportation across a range of sites, spanning logistics hubs and indoor or outdoor areas having material containers of different types. Nonetheless, limitations related to contemporary battery technology, such as energy management, space constraints on the chassis, weight issues, and cost factors, often hinder adequate installation and utilization of energy storage devices in these machines. The present inventor has therefore identified an opportunity to improve the efficiency of these material handling machines, with a primary focus on energy management of handling operations.

### SUMMARY

According to a first aspect of the disclosure there is provided a computer system for providing a handling operation recommendation for an electric material handling machine. The computer system comprises processing circuitry configured to obtain container-related data of a plurality of containers located at a site; obtain battery attributes of the electric material handling machine; determine handling operations operable by the electric material handling machine with respect to the plurality of containers based on the container-related data; determine energy management data based on the battery attributes and the handling operations; and provide a handling operation recommendation for the electric material handling machine based on the energy management data. The first aspect of the disclosure may seek to improve the operational efficiency of a material handling machine. A technical benefit may include saving money and space by not requiring installation of more batteries than needed for their operation, increasing the lifetime expectancy of the battery, and improving the operation of the electric material handling machine in terms of energy efficiency.

Optionally in some examples, including in at least one preferred example, the energy management data comprises a prioritization of an order in which the handling operations are to be carried out with respect to the battery attributes based on an amount of energy consumed or regenerated while carrying out said handling operations. A technical benefit may include providing a practical scheme of providing a handling operation prioritization such that the operation of the electric material handling machine in terms of energy efficiency is improved.

Optionally in some examples, including in at least one preferred example, the amount of energy consumed or regenerated while carrying out said handling operations is calculated as a function of the container-related data comprising a weight of a container, a time or distance during which a container is expected to be carried by the electric material handling machine, a time or distance during which the electric material handling machine is expected to move towards or from a container, and optionally a height difference of a relocation of a container. A technical benefit may include providing a functional relationship between the container-related data, the battery attributes and the handling operations operable with respect to the containers. Accordingly, calculations for improving the operation of the electric material handling machine, in terms of energy efficiency, is provided.

Optionally in some examples, including in at least one preferred example, the prioritization relates to respective energy consumption of the handling operations being container lifting operations. A technical benefit may include specifically considering energy consuming operations being container lifting operations as one of the primary actions for energy consumption and planning the energy management data accordingly to improve the operation of the electric material handling machine in terms of energy efficiency.

Optionally in some examples, including in at least one preferred example, the prioritization involves, within acceptable values of a recovery time comprised in the battery attributes, assigning higher energy consuming container lifting operations to higher values of state of charge comprised in the battery attributes compared to lower energy consuming container lifting operations. A technical benefit may include taking into account both the battery's recovery time and state of charge when planning the handling operations to improve the overall operation of the electric material handling machine in terms of energy efficiency.

Optionally in some examples, including in at least one preferred example, the processing circuitry is configured to prioritize an energy regeneration of the handling operations being container lowering operations. A technical benefit may include specifically considering energy regenerating operations being container lowering operations as one of the primary actions for energy regeneration and planning the energy management data accordingly to improve the operation of the electric material handling machine in terms of energy efficiency.

Optionally in some examples, including in at least one preferred example, the prioritization involves assigning higher energy regenerating container lowering operations to lower values of state of charge comprised in the battery attributes compared to lower energy regenerating container lowering operations. A technical benefit may include taking into account the battery's state of charge when planning the handling operations to improve the overall operation of the electric material handling machine in terms of energy efficiency.

Optionally in some examples, including in at least one preferred example, the processing circuitry is further configured to optimize the energy management data based on an optimization property of the electric material handling machine, the optimization property being one or more of: a minimum energy consumption of the electric material handling machine, a number of said plurality of containers moved or to be moved by the electric material handling machine, and a number of battery charging sequences that has been carried out by the electric material handling machine. A technical benefit may include an improved energy management data for an increased operational efficiency of the electric material handling machine.

Optionally in some examples, including in at least one preferred example, the battery attributes depend on one or more of a weight of the electric material handling machine, an energy efficiency of the electric material handling machine, battery characteristics of a battery of the electric material handling machine, and idling data of the electric material handling machine. A technical benefit may include taking into account battery properties of the electric material handling machine such that the energy management data is improved for specific types of electric material handling machines.

Optionally in some examples, including in at least one preferred example, the processing circuitry is configured to control the electric material handling machine to carry out a handling operation based on the handling operation recommendation. A technical benefit may include being able to carry out (autonomous or manual) control of handling operations of the electric material handling machine based on the provided recommendations, thereby enabling the advantages discussed above in prevailing settings of the site.

Optionally in some examples, including in at least one preferred example, the processing circuitry is configured to control the electric material handling machine to carry out an auxiliary handling machine operation based on the handling operation recommendation, the auxiliary handling machine operation being one or more of: a charging operation, a driving operation including an autonomous navigation operation, a collision avoidance operation and an ADAS operation, a climate control operation, a telematics operation, and a diagnostics operation. A technical benefit may include being able to carry out (autonomous or manual) control of auxiliary handling operations of electric material handling machine based on the provided recommendations, thereby enabling the advantages discussed above in prevailing settings of the site.

According to a second aspect of the disclosure there is provided an electric material handling machine comprising the computer system of the first aspect. The second aspect of the disclosure may seek to improve the operational efficiency of a material handling machine. A technical benefit may include saving money and space by not requiring installation of more batteries than needed for their operation, increasing the lifetime expectancy of the battery, and improving the operation of the electric material handling machine in terms of energy efficiency.

According to a third aspect of the disclosure there is provided a computer-implemented method for providing a handling operation recommendation for an electric material handling machine. The method comprises obtaining, by processing circuitry of a computer system, container-related data of a plurality of containers located at a sit; obtaining, by the processing circuitry, battery attributes of the electric material handling machine; determining, by the processing circuitry, handling operations operable by the electric material handling machine with respect to the plurality of containers based on the container-related data; determining, by the processing circuitry, energy management data based on the battery attributes and the handling operations; and providing, by the processing circuitry, a handling operation recommendation for the electric material handling machine based on the energy management data. The third aspect of the disclosure may seek to improve the operational efficiency of a material handling machine. A technical benefit may include saving money and space by not requiring installation of more batteries than needed for their operation, increasing the lifetime expectancy of the battery, and improving the operation of the electric material handling machine in terms of energy efficiency.

According to a fourth aspect of the disclosure there is provided a computer program product comprising program code for performing, when executed by the processing circuitry, the method of the third aspect. The fourth aspect of the disclosure may seek to improve the operational efficiency of a material handling machine. A technical benefit may include saving money and space by not requiring installation of more batteries than needed for their operation, increasing the lifetime expectancy of the battery, and improving the operation of the electric material handling machine in terms of energy efficiency.

According to a fifth aspect of the disclosure there is provided a non-transitory computer-readable storage medium comprising instructions, which when executed by the processing circuitry, cause the processing circuitry to perform the method of the third aspect. The fifth aspect of the disclosure may seek to improve the operational efficiency of a material handling machine. A technical benefit may include saving money and space by not requiring installation of more batteries than needed for their operation, increasing the lifetime expectancy of the battery, and improving the operation of the electric material handling machine in terms of energy efficiency.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary electric material handling machine comprising a computer system for providing a handling operation recommendation, according to an example.
**FIG. 2** is an illustration of an exemplary site having a plurality of containers where an electric material handling machine may operate, according to an example.
**FIG. 3** is an exemplary diagram how energy management data may be determined, according to an example.
**FIG. 4** is a flowchart of an exemplary method to provide a handling operation recommendation for an electric material handling machine, according to an example.
**FIG. 5** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

The present disclosure addresses the issues raised in the background section by predicting energy and power usage of the electric material handling machine in relation to the containers available at the site, and more specifically to handling operations operable in relation to the containers. By obtaining container-related data and determining handling operations based thereon, a relationship between obtained battery attributes and the handling operations can be established. The relationship provides energy management data, which is then used to recommend a handling operation for the electric material handling machine. The electric material handling machine may thus be operated in an energy efficient manner, such that different handling operations may be carried out at different times during the day to improve the utilization of the battery. For example, it might be beneficial to carry out some lifts requiring higher energy at the beginning of a shift and save lighter lifts towards the end of the shift. Some technical advantages of this approach include saving money and space by not requiring installation of more batteries than needed for their operation, increasing the lifetime expectancy of the battery, and improving the operation of the electric material handling machine in terms of energy efficiency.

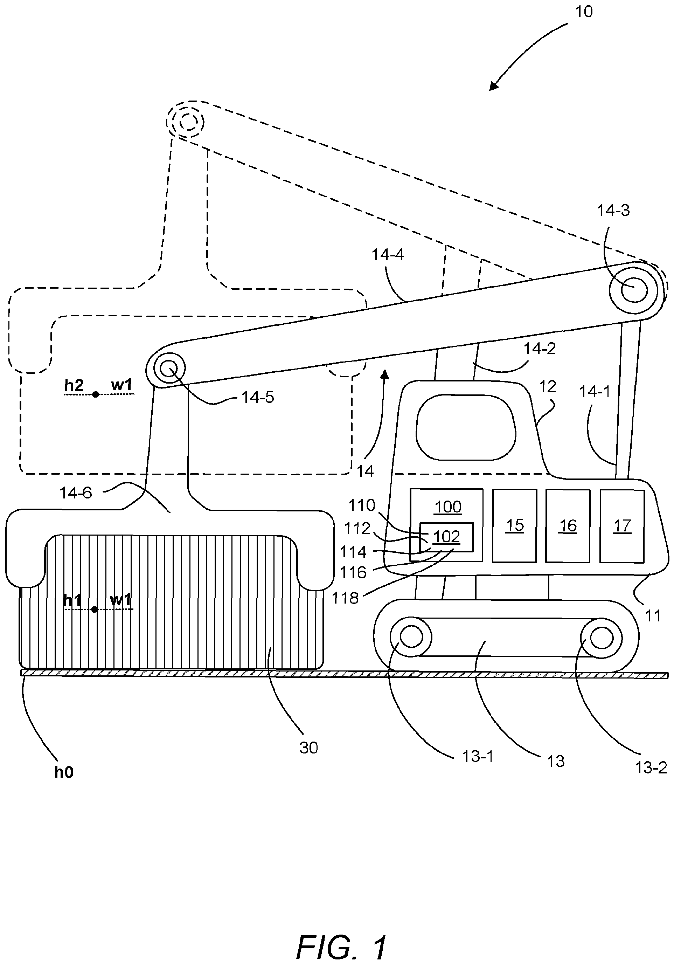

FIG. 1 is an exemplary illustration of a computer system 100 comprising processing circuitry 102. The computer system 100 is configured to provide a handling operation recommendation 118 for an electric material handling machine 10. In this example the computer system 100 is arranged in the electric material handling machine 10, but in other examples the computer system 100 may be provided externally to the electric material handling machine **10,** for instance in a cloud-based service. The cloud-based service may be arranged to communicate to processing circuitry of the electric material handling machine **10** for purposes of providing a handling operation recommendation **118.** In yet alternative examples, some parts of the computer system **100** is arranged in the electric material handling machine **10** while other parts of the computer system **100** is arranged in the cloud service.

The electric material handling machine **10** may be any type of electrical industrial vehicle commonly used in indoor and/or outdoor sites to manage and transport containers. In non-limiting examples, electrical industrial vehicles may include electrical forklifts, electrical aerial work platforms, electrical pallet jacks, electrical tuggers, electrical automated guided vehicles, electrical tractors, among other vehicle types.

This particular electric material handling machine **10** comprises various components and parts adapted to manage and transport containers or parts stored in said containers. The skilled person will appreciate that other electric material handling machines may be employed for similar purposes as explained in the present disclosure. The electric material handling machine **10** comprises a body portion, here separated into a main body portion **11** and a cabin portion **12.** The electric material handling machine **10** further comprises a movement enabling portion **13,** in this particular example involving a pair of wheels **13-1, 13-2,** configured to cause movement of the electric material handling machine **10.** The movement enabling portion **13** may be arranged to cause movement of the electric material handling machine **10** from a first location to one or more second locations different from the first location, such as locations within a site/facility.

The electric material handling machine **10** further comprises a container carrying device **14** adapted to carry a container **30.** The container carrying device **14** may be adapted to carry an entire container **30,** as is the case in the illustration, two or more containers **30,** or parts of one or more containers, such as sub-containers and/or components located within the containers. The container carrying device **14** may be adapted to cause a lifting operation, such that the container **30** with weight **wl** located at height **h1** in relation to ground height **h0** can be lifted to height **h2.** The container carrying device **14** may be adapted to cause a lowering operation, such that the container **30** with weight **wl** located at height **h2** in relation to ground height **h0** can be lowered to height **h2.** The heights **h1**, **h2** may be any height reachable by the electric material handling machine **10,** and more specifically by the container carrying device **14.** In this particular example, the container carrying device **14** comprises a static member **14-1** extending upwardly from the electric material handling machine **10.** The container carrying device **14** further comprises an extendable member **14-2** arranged to extend upwardly from the electric material handling machine **10.** The container carrying device **14** further comprises a carrying member **14-4** arranged to carry the container **30** via a carrier portion **14-6.** The carrying member **14-4** is arranged to rotate around a first rotating mechanism **14-3,** and the carrier portion **14-6** is arranged to rotate around a second rotating mechanism **14-5.**

The electric material handling machine **10** further comprises a battery management system **15** and a battery **16.** The battery management system **15** is adapted to monitor, protect and optimize the performance of the battery **16,** thereby ensuring safe and efficient operation and prolonging the lifetime expectancy of the battery **32.** The battery **32,** being for instance a lithium-ion battery, is used to store electrical energy in the form of chemical energy. The battery **32** is rechargeable and adapted to provide a source of electricity. The source of energy may be provided for the container carrying device **14** for carrying out lifting or lowering operations of the container **30.** The source of energy may additionally be provided for an operation of an auxiliary vehicle system **17** of the electric material handling machine **10.** Powered by energy from the battery **32,** the electric material handling machine **10** may be configured to carry out handling operations **114** or auxiliary handling operations **114.**

The electric material handling machine **10** further comprises one or more auxiliary vehicle systems **17.** The auxiliary vehicle systems **17** provide auxiliary functionalities beyond functionalities pertaining to handling operations **114.** To this end, the source of energy may be provided for e.g., the movement enabling portion **13** to enable movement of the electric material handling machine **10.** In some examples, auxiliary vehicle systems **17** may include one or more of power take-off (PTO) systems, hydraulic systems, air compression systems, auxiliary generators, cooling systems, power steering systems, air conditioning systems, auxiliary lighting systems, infotainment systems, and the like. The auxiliary vehicle systems **17** are associated with respective auxiliary energy consumptions and/or regenerations. Purely by way of example, an auxiliary vehicle system **17** may be a regenerative braking system adapted to regenerate energy for the battery **32** in response to braking events, or a climate control system adapted to consume energy from the battery **32** in response to an activated cooling event. Other such examples are readily envisaged by the skilled person.

The processing circuitry **102** is configured to obtain container-related data **110** of the container **30.** It shall be understood that the container-related data **110** will be obtained for a plurality of containers located at a site, although this very example focuses on the one container **30** for reasons of brevity. The container-related data **110** may be any data pertaining to the container **30** that have an effect on energy management of the electric material handling machine **10.** The container-related data **110** may be provided to the computer system **30** by a central controller of a site, by a cloud-based service, by a controller, measuring device, sensory device or estimation device of the container **30,** by a controller, measuring device, sensory device or estimation device of the electric material handling machine **10,** or by a controller, measuring device, sensory device or estimation device of another electric material handling machine operating at the site. Said another electric material handling machine may be part of the same fleet as the electric material handling machine **10,** or optionally a different fleet.

The container-related data **110** may include a weight of the container **30.** It shall be understood that heavier weights typically cause the electrical material handling machine **10** to consume or regenerate more energy compared to lighter weights. The weight may be obtained by a weight measuring device configured to directly and/or indirectly obtain the weight. The weight measuring device may comprise one or more load cells, scales, lever systems, force sensors, strain gauges, piezoelectric sensors, capacitive sensors, magnetic sensors, optical sensors, ultrasonic sensors, and similar devices/units.

The container-related data **110** may include a time or distance during which the container **30** is expected to be carried by the electric material handling machine **30.** It shall be understood that longer distances travelled or longer time spent travelling distances while carrying the container **30** typically cause the electrical material handling machine **10** to consume or regenerate more energy compared to shorter distances/time spent travelling distances.

The container-related data **110** may include a time or distance during which the electric material handling machine **10** is expected to move towards or from a container **30.** It shall be understood that longer distances travelled or longer time spent travelling distances towards or from different containers typically cause the electrical material handling machine **10** to consume or regenerate more energy compared to shorter distances/time spent travelling distances.

The time or distance referred to above (for one or both of the time/distance carrying the container **30** or moving between containers) may be obtained through an estimation system. The estimation system may be configured to obtain location data of the electric material handling machine **10** for tracking a position, speed, and/or route thereof. The location data may be GPS data, GNSS data, triangulation data (e.g., from WiFi or cellular triangulation), Bluetooth beacon data, photogrammetry data, satellite imagery data, and the like. The location data may be obtained for an origin position where the electric material handling machine **10** is moving from, and for an end position where the electric material handling machine **10** is expected to move to. Based on a difference between the location data of the origin and end positions, an expected distance can be calculated. An expected time may be calculated in a similar way, but with the addition of taking into account an expected movement speed between the origin position and the end position. The estimation system may optionally be configured to employ a machine learning algorithm for improving its estimation accuracy. The machine learning model may be based on any suitable algorithms known in the art, such as an artificial neural network, regression algorithm, K-nearest neighbors, decision tree, support vector machine, and the like. The machine learning model may take into account historical driving data, current traffic conditions at the site, weather conditions, to name a few exemplary learning parameters.

The container-related data **110** may also optionally include a height difference of a relocation of the container **30.** This data may be of relevance in cases where a relocation of a container **30** from a first height, such as **h1,** to a second height, such as **h2,** causes a difference in height. In some cases, however, a relocation of the container **30** does not necessarily involve a height difference, hence the optionality. The height may be obtained by a height measuring device configured to directly and/or indirectly obtain the difference in height. The height measuring device may comprise one or more ultrasonic distance sensors, laser distance sensors, infrared distance sensors, capacitive proximity sensors, photoelectric sensors, lidar sensors, pressure sensors, strain gauge sensors encoders, load cells, and similar devices/units.

The processing circuitry **102** is further configured to obtain battery attributes **112** of the electric material handling machine **10.** The battery attributes **112** relate to the battery **16.** The battery attributes **112** may include a state of charge (SoC). The SoC is a percentage that shows how much energy the battery **16** currently holds compared to its full capacity. It ranges from 0% (completely empty) to 100% (fully charged). The SoC may be obtained from the battery management system **15.** The battery attributes **112** may include a recovery time. The recovery time is sometimes referred to as a power ability of the battery. The recovery time refers to the period required for the battery **16** to return to a stable and functional state after being subjected to high-energy-consuming operations or discharged to a significant extent. During this recovery time, the chemical processes and internal components of the battery **16** may need to readjust and stabilize. Once the recovery period is complete, the battery should be ready to deliver its rated performance and capacity again.

The battery attributes **112** may depend on a characteristic of the electric material handling machine **10.** It is thus assumed that the battery attributes **112** of the battery **16** may vary depending on what type of electric material handling machine (or electric industrial vehicle in general) it is provided in. The characteristic of the electric material handling machine **10** may be one or more of a weight, an energy efficiency (i.e., how efficient the electric material handling machine **10** can perform handling operations **114**), internal battery characteristics of the battery **16** (such as capacity, voltage, energy/power density, chemistry, temperature ranges, and the like), and idling data of the electric material handling machine **10.** The idling data may refer to information or data related to the operation of a machine when it is in an idle or inactive state (being parked for instance). The idling data may include details about the behavior, energy consumption, and performance of the electric material handling machine **10** when it is not actively engaged in its primary tasks, such as a time spent charging the battery **16.**

In examples of this disclosure, it shall be understood that the container-related data **110** and/or the battery attributes **112** may be obtained at any time. Hence, this information may be obtained prior to a handling operation being carried out, during a handling operation being carried out, or after a handling operation being carried out. The particular order in which this information is obtained is thus not necessarily of relevance.

The processing circuitry **102** is further configured to determine handling operations **114** operable by the electric material handling machine **10** with respect to the container **30** based on the container-related data **110.** Since different containers are typically associated with different properties, such as pertaining to the one or more container-related data **110,** it shall be understood that different types of handling operations **114** may be carried out with respect to the different containers. The handling operations **114** discussed herein are primarily lifting operations and lowering operations, although other energy consuming or regenerating handling operations **114** are readily envisaged. Such handling operations **114** may relate to loading and unloading operations, stacking and storage operations, transportation operations, sorting operations, inspection operations, weighing operations, repair and maintenance operations, stripping and stuffing operations, and the like. Generally, a handling operation may be seen as causing a relocation of the container **30,** or parts loaded therein, within a site where the container **30** is present.

The processing circuitry **102** is further configured to determine energy management data **116** based on the battery attributes **112** and the handling operations **114.** Since the handling operations **114** are based on the container-related data **110,** the energy management data **116** will indirectly also be based on the container-related data **110.** Hence, the energy management data **116** involves a relationship of how energy should be managed with respect to the container-related data **110** for the handling operations **114** operable on the container **30.**

In some examples, the energy management data **116** may involve a prioritization of an order in which the handling operations **114** are to be carried out. This is based on an amount of energy consumed or regenerated while carrying out the handling operations **114.** The energy management data **116** may thus include a list or some other type of data structure involving one or more handling operations **114** in an order of priority based on the container-related data **110** and the battery attributes **112.** The data structure may be temporally ordered, i.e., in a descending order of time for when each handling operation should be carried out, based on expected battery attribute evolution over a time period defined by the temporal order. Accordingly, the energy management data **116** may provide a practical approach of allowing the handling operations **114** to be carried out in an order that is as energy effective as possible, in view of the container-related data **110.**

In the examples described above, the amount of energy consumed or regenerated while carrying out the handling operations **114** may be calculated as a function of the container-related data **110.** The function may take into account a weight of the container 30, a time or distance during which the container **30** is expected to be carried by the electric material handling machine **10,** a time or distance during which the electric material handling machine is expected to move towards or from the container **30** to/from another container, and optionally a height difference of a relocation of the container **30.**

In some examples, the processing circuitry **102** may be configured to optimize the energy management data **116** based on an optimization property of the electric material handling machine **10.** The optimization property may be a minimum energy consumption of the electric material handling machine **10.** Optimization based on the minimum energy consumption may provide a reduced operating cost, a reduced environmental impact, and an improved operating efficiency. The optimization property may be a number of containers moved or to be moved by the electric material handling machine **10.** Optimization based on a number of containers moved or to be moved may provide an estimate of a future operation of the electric material handling machine **10.** The optimization property may be a number of battery charging sequences that has been carried out by the battery **16** of the electric material handling machine **10.** Optimization based on battery charging sequences may take into account idling data such as how long time it takes to charge the battery **16,** when the battery **16** is expected to require maintenance or replacement. The optimization property may be one or more of the properties described above, and optionally a weighted value taking into account plural optimization properties in relation to one another. Ultimately, the optimization as discussed above may provide an improved way of planning the handling operations **114,** for example the prioritization thereof in relation to one another.

In some examples, the processing circuitry **102** may be configured to optimize the energy management data **116** based on geographical data of a site where the electric material handling machine **10** is operating. In these examples, the locational data as discussed above may be taken into account for optimizing the way the energy management data **116** is handled. Purely by way of example, GPS data may indicate how a present site is arranged. Based on this knowledge, the energy management data **116** may be optimized by travelling according to preferred travelling routes that do not involve unnecessary energy consuming travelling.

The processing circuitry **102** is further configured to provide a handling operation recommendation **118** for the electric material handling machine **10** based on the determined energy management data **116.** This approach may vary depending on numerous factors, such as whether the electric material handling machine **10** is manually operated by a user or autonomously operated. The handling operation recommendation **118** typically indicates the handling operation of highest priority, as is apparent by the energy management data **116.** Optionally, one or more of the handling operations **114** with highest priority may be skipped or postponed. This would for example be the case if other handling operations **114** are provided with a prioritization indicator, or if the recovery time of the battery **16** does not allow for a certain handling operation to be carried out.

For autonomously operated electric material handling machines, the handling operation recommendation **118** may be provided as instructional data for carrying out an autonomous control action, such as an auxiliary handling machine operation including e.g. a driving operation. To this end, the processing circuitry **102** may be configured to autonomously control the electric material handling machine **10** to carry out a handling operation based on the handling operation recommendation **118.** The autonomous control may be done by translating the decision to carry out the recommended handling operation into control commands for one or more actuators of the electric material handling machine 10, such as actuators of the container carrying device **14.**

For manually operated electric material handling machines, the handling operation recommendation **118** may be provided as instructional data via a user interface. The user interface may be any suitable user interface arranged to provide informational cues to the operator of the manually operated electric material handling machine. The user interface may be a graphical user interface (such as a vehicle's control panel or an augmented reality device), an auditory user interface (such as a speaker), or a haptic user interface (such as a tactile device arranged in the vehicle's steering device), to name a few exemplary user interfaces. The instructional data may include one or more indicators or instructional cues for the operator to follow for carrying out the recommended handling operation, such as "drive to location X", "lift container Y", "place container Y at location Z", and so forth.

The handling operation recommendation **118** may also be related to one or more auxiliary handling machine operations. The auxiliary handling machine operations may be associated with any of the auxiliary systems **17.** The auxiliary handling machine operations include operations that are not necessarily associated with lifting or lowering the container **30,** but nevertheless may cause an energy regeneration or consumption. The auxiliary handling machine operations may be one or more of a charging operation, a driving operation including an autonomous navigation operation, a collision avoidance operation and an ADAS (Advanced Driver Assistance System) operation, a climate control operation, a telematics operation, and a diagnostics operation. The charging operation may include one or more of a location where to charge the electric material handling machine **10,** a time during which the electric material handling machine **10** should be charged, a speed of how fast the charging of the electric material handling machine **10** should be carried out, a selected charging protocol, and a payment and authentication procedure. The autonomous navigation operation may include one or more of a steering operation, a braking operation, a propulsion operation, etc. The collision avoidance operation may include a set of planned driving action to be taken for navigating to avoid colliding with other vehicles and/or objects. The climate control operation may include one or more of a time, power and schedule of how to control the climate-influencing devices of the electric material handling machine **10.** The telematics operation may include one or more of wireless communication with other vehicles or a central site controller, or an external controller, activating/deactivating GPS tracking, initiating or shutting off data collection, controlling vehicle connectivity, etc. The diagnostics operation may include one or more of onboard diagnostics, maintenance, inspection, repair, data analysis, etc. In view of the above, the energy management data **116** may accordingly involve both the handling operations **114** and the auxiliary handling machine operations, together ordered according to what is disclosed herein.

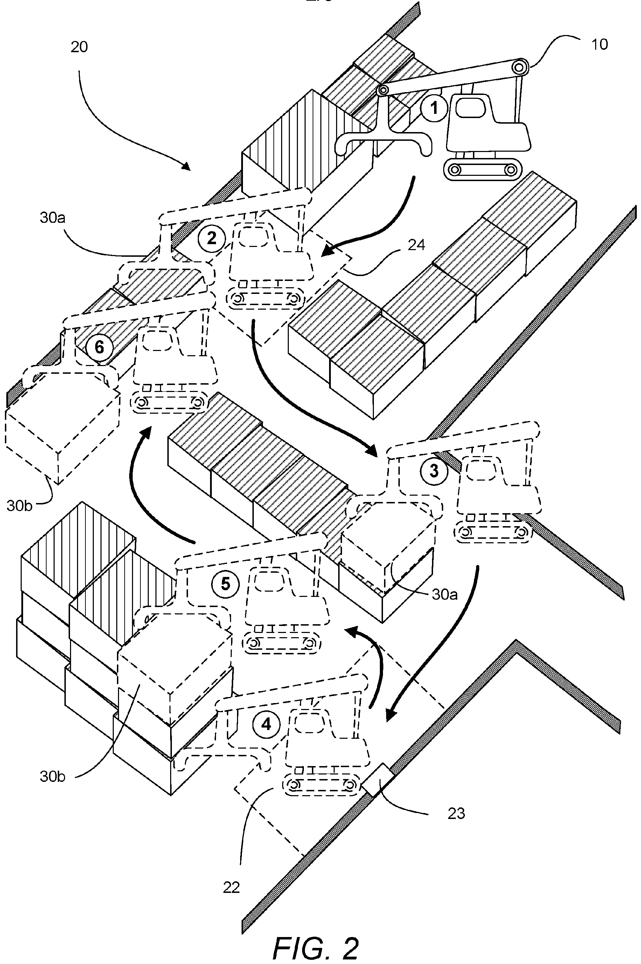

With further reference to **FIG. 2****,** an exemplary site **20** where the electric material handling machine **10** may operate is shown according to one example. The site **20** is not limited to a particular site, and may be any indoor or outdoor area having material containers of different types for purposes of transportation, management and distribution of goods. In non-limiting examples, the site **20** may be a container port and terminal, logistics facility, warehouse or distribution center, cross-docking facility, intermodal freight terminals, manufacturing and production plant, air cargo hub, rail yard, e-commerce fulfillment centers, border crossings and customs facility. The site **20** comprises a plurality of containers **30** distributed across the site **20.** A container **30** may be associated with an operation area **24** in which the electric material handling machine **10** may perform its operations with respect to the associated container **30.** The site **20** may comprise a charging area **22** where the electric material handling machine **10** may charge its battery **16** at an associated charging station **23.**

The exemplary illustration of **FIG. 2** shows one potential route that the electric material handling machine **10** may take based on a plurality of handling operation recommendations **118** as explained in this disclosure. The route involves six (6) different locations, as denoted by the numbers of the figure. The number of handling operations **114** of the route depends on various factors, such as battery attributes **112,** geographical data of the site **20,** characteristics of the electric material handling machine **20,** and/or details of the container-related data **110.** Note that this is but one exemplary route. Other routes may involve any number of handling operations **114** or auxiliary handling operations **114,** and may be carried out for an electric material handling machine for a given time. In examples of the disclosure, an electric material handling machine may be operated to perform one single handling operation, or be operated to perform handling operations **114** during the entire lifetime of the electric material handling machine. No limitations shall thus be seen in this regard. The route to be taken has been determined based on the energy management data **116,** which in turn is based on the battery attributes **112** and the handling operations **114** operable with respect to the containers **30** based on the container-related data **110.** To this end, container-related data **110** of the plurality of containers **30** located at the site **20** has been obtained. Moreover, battery attributes **112** of the electric material handling machine **10** has been obtained.

At location (1) the electric material handling machine **10** is located at an origin position. It has been recommended that the electric material handling machine **10** shall carry out an auxiliary handling machine operation to move towards the operation area **24.** At location (2) the electric material handling machine **10** has reached the operation area **24** and is recommended to carry out a relocation operation of the container **30a** to another location. This relocation involves a lifting operation, a movement operation, and a lowering operation. At location (3) the electric material handling machine **10** has lifted the container **30a** from a pickup position, moved to another position whilst carrying the container **30a,** and lowered the container **30a** such that it is now placed at a second location. The electric material handling machine **10** has then been recommended to move to the charging area **22** due to a low state of charge of the battery. At step (4) the electric material handling machine **10** has carried out a charging operation, and received an additional recommended action to take, which involves driving to location (5). At location (5) the electric material handling machine **10** is instructed to relocate the container **30b** to the location (6). This is done by carrying out a lifting operation of the container **30b** such that it can be carried, an auxiliary movement operation towards the location (6), and a lowering operation for placing the container **30b** at ground level. The route is then finished. One or more of the various handling operations **114** performed during the route may be recommended before the electric material handling machine **10** is moved from location (1), or recommended one after the other at each new location or after a previous handling operation being performed. No limitation shall be put in this context as to when the various operations are recommended, since predictions may be made regarding future actions.

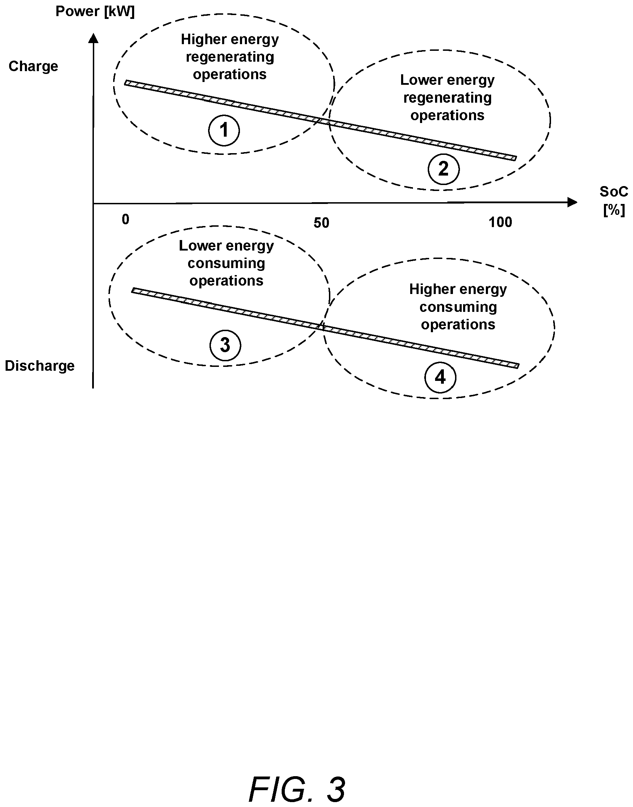

**FIG. 3** is an exemplary diagram illustrating how energy management data 116 can be determined by an exemplary prioritization. The horizontal axis of the diagram shows a current SoC [%] of the battery **15** of the vehicle, and the vertical axis of the diagram shows whether power [kWh] is discharged or charged for certain operations of the electric material handling machine **10.** The diagram features four zones. The first zone (1) corresponds to higher energy regenerating operations, i.e., operations that regenerate a higher amount of energy compared to the second zone (2) of lower energy regenerating operations. By way of example, if a container is moved from a height of 10 meters to ground level, this typically regenerates more energy compared to a container being moved from a height of 1 meter to ground. The third zone (3) corresponds to lower energy consuming operations, i.e., operations that consume a lower amount of energy compared to the fourth zone (4) of higher energy consuming operations. By way of example, if a container is moved from ground level to a height of 10 meters, this typically consumes more energy compared to a container being moved ground level to a height of 1 meter. Note that each one of the zones (1) through (4) may be divided into a plurality of sub-zones as appropriate, for instance such that regenerating or consuming operations can be further divided into quantiles according to their respective energy regenerating or consuming values.

In some examples, the prioritization of handling operations **114** relate to respective energy regeneration of the handling operations **114** being container lowering operations (or optionally any other handling operation causing an energy to be regenerated). These examples correspond to zones (1) and (2). According to the diagram, higher energy regenerating lowering operations is more likely to be assigned to lower percentage levels of the SoC, as they can regenerate more energy to the battery **15** compared to lower energy consuming lifting operations. This may advantageously mitigate the risk of regenerating energy when it is not needed, and may instead utilize higher regeneration operations when it is needed more (e.g., upon the current SoC being lower).

In some examples, the prioritization of handling operations **114** relate to respective energy consumption of the handling operations **114** being container lifting operations (or optionally any other handling operation causing an energy to be consumed). These examples correspond to zones (3) and (4). According to the diagram, higher energy consuming lifting operations is more likely to be assigned to higher percentage levels of SoC, as they require more energy to be carried out compared to lower energy consuming lifting operations. This may advantageously mitigate the risk of consuming an excessive amount of energy when the current SoC is lower, and may instead utilize the execution of higher energy consuming operations when the level of SoC is sufficiently high. A possible exception to this is while the battery **15** is still recovering due to a high energy consuming operation recently being performed. For this possible exception, the battery attributes **112** is not within acceptable values of the recovery time, which may lead to less energy consuming operations being prioritized to higher SoC values.

In some examples, the container-related data **110** may comprise an operation prioritization indicator. The indicator may indicate whether the container **30** associated therewith involves a prioritized load. Indicators indicating loads of higher priority may receive precedence for a certain handling operation, while indicators indicating loads of lower priority may receive antecedence for said certain handling operation. For example, a prioritization of a handling operation for a container associated with a higher energy consumption can be postponed if another handling operation for the container is prioritized, based on the operation prioritization indicator. This may be the case regardless of the available battery attributes **112,** such as the current SoC.

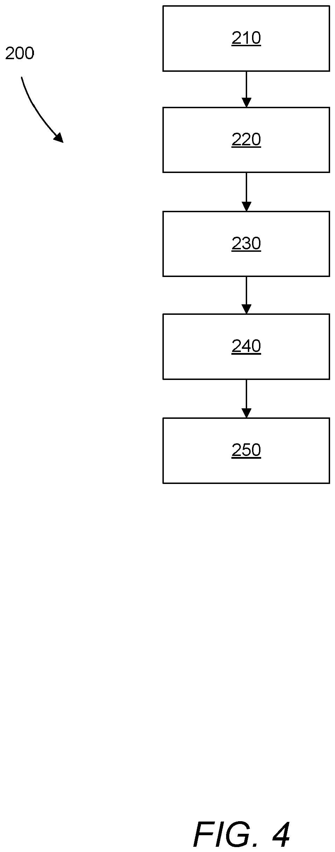

**FIG. 4** is a flowchart of a method **200** for providing a handling operation recommendation 118 for an electric material handling machine, such as the electric material handling machine **10** discussed herein, according to an example. The method **200** comprises obtaining **210,** by processing circuitry of a computer system, such as the processing circuitry **102** of the computer system **100,** container-related data **110** of a plurality of containers located at a site, such as the containers **30** located at the site **20.** The method **200** further comprises obtaining **220,** by the processing circuitry, battery attributes **112** of the electric material handling machine. The method **200** further comprises determining **230,** by the processing circuitry, handling operations **114** operable by the electric material handling machine with respect to the plurality of containers based on the container-related data **110.** The method **200** further comprises determining, by the processing circuitry, energy management data **116** based on the battery attributes **112** and the handling operations **114.** The method **200** further comprises providing **250,** by the processing circuitry, a handling operation recommendation **118** for the electric material handling machine based on the energy management data **116.**

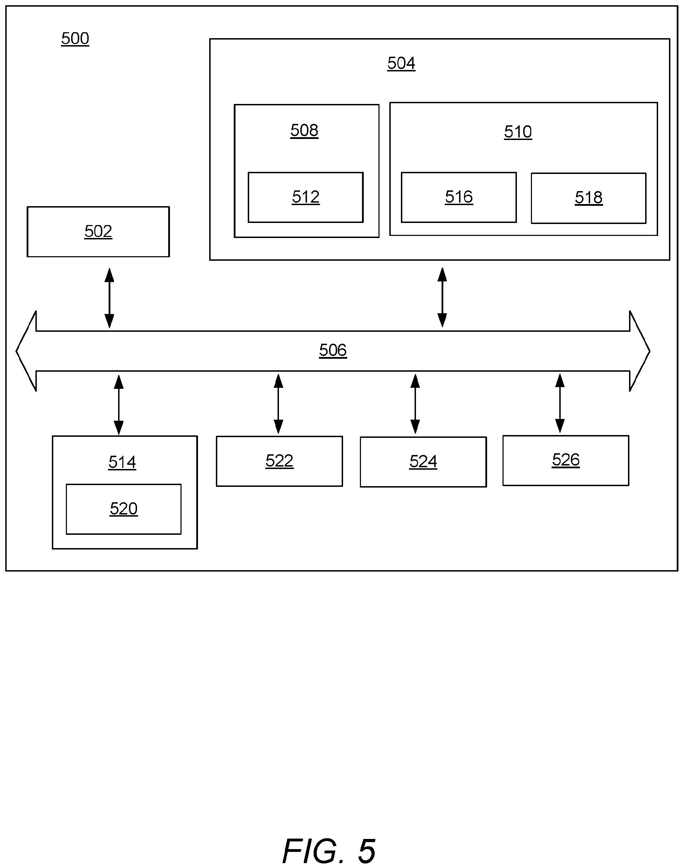

**FIG. 5** is a schematic diagram of a computer system **500** for implementing examples disclosed herein. The computer system **500** is adapted to execute instructions from a computer-readable medium to perform these and/or any of the functions or processing described herein. The computer system **500** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **500** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **500** may comprise at least one computing device or electronic device capable of including firmware, hardware, and/or executing software instructions to implement the functionality described herein. The computer system **500** may include processing circuitry **502** (e.g., processing circuitry including one or more processor devices or control units), a memory **504,** and a system bus **506.** The computer system **500** may include at least one computing device having the processing circuitry **502.** The system bus **506** provides an interface for system components including, but not limited to, the memory **504** and the processing circuitry **502.** The processing circuitry **502** may include any number of hardware components for conducting data or signal processing or for executing computer code stored in memory **504.** The processing circuitry **502** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **502** may further include computer executable code that controls operation of the programmable device.

The system bus **506** may be any of several types of bus structures that may further interconnect to a memory bus (with or without a memory controller), a peripheral bus, and/or a local bus using any of a variety of bus architectures. The memory **504** may be one or more devices for storing data and/or computer code for completing or facilitating methods described herein. The memory **504** may include database components, object code components, script components, or other types of information structure for supporting the various activities herein. Any distributed or local memory device may be utilized with the systems and methods of this description. The memory **504** may be communicably connected to the processing circuitry **502** (e.g., via a circuit or any other wired, wireless, or network connection) and may include computer code for executing one or more processes described herein. The memory **504** may include non-volatile memory **508** (e.g., read-only memory (ROM), erasable programmable read-only memory (EPROM), electrically erasable programmable read-only memory (EEPROM), etc.), and volatile memory **510** (e.g., random-access memory (RAM)), or any other medium which can be used to carry or store desired program code in the form of machine-executable instructions or data structures and which can be accessed by a computer or other machine with processing circuitry **502.** A basic input/output system (BIOS) **512** may be stored in the non-volatile memory **508** and can include the basic routines that help to transfer information between elements within the computer system **500.**

The computer system **500** may further include or be coupled to a non-transitory computer-readable storage medium such as the storage device **514,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **514** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **514** and/or in the volatile memory **510,** which may include an operating system **516** and/or one or more program modules **518.** All or a portion of the examples disclosed herein may be implemented as a computer program **520** stored on a transitory or non-transitory computer-usable or computer-readable storage medium (e.g., single medium or multiple media), such as the storage device **514,** which includes complex programming instructions (e.g., complex computer-readable program code) to cause the processing circuitry **502** to carry out actions described herein. Thus, the computer-readable program code of the computer program **520** can comprise software instructions for implementing the functionality of the examples described herein when executed by the processing circuitry **502.** In some examples, the storage device **514** may be a computer program product (e.g., readable storage medium) storing the computer program **520** thereon, where at least a portion of a computer program **520** may be loadable (e.g., into a processor) for implementing the functionality of the examples described herein when executed by the processing circuitry **502.** The processing circuitry **502** may serve as a controller or control system for the computer system **500** that is to implement the functionality described herein.

The computer system **500** may include an input device interface **522** configured to receive input and selections to be communicated to the computer system **500** when executing instructions, such as from a keyboard, mouse, touch-sensitive surface, etc. Such input devices may be connected to the processing circuitry **502** through the input device interface **522** coupled to the system bus **506** but can be connected through other interfaces, such as a parallel port, an Institute of Electrical and Electronic Engineers (IEEE) 1394 serial port, a Universal Serial Bus (USB) port, an IR interface, and the like. The computer system **500** may include an output device interface **524** configured to forward output, such as to a display, a video display unit (e.g., a liquid crystal display (LCD) or a cathode ray tube (CRT)). The computer system **500** may include a communications interface **526** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A computer system (100) for providing a handling operation recommendation (118) for an electric material handling machine (10), the computer system (100) comprising processing circuitry (102) configured to: obtain container-related data (110) of a plurality of containers (30) located at a site (20); obtain battery attributes (112) of the electric material handling machine (10); determine handling operations 114 operable by the electric material handling machine (10) with respect to the plurality of containers (30) based on the container-related data (110); determine energy management data (116) based on the battery attributes (112) and the handling operations 114; and provide a handling operation recommendation (118) for the electric material handling machine (10) based on the energy management data (116).

Example 2: The computer system (100) of example 1, wherein the energy management data (116) comprises a prioritization of an order in which the handling operations 114 are to be carried out with respect to the battery attributes (112) based on an amount of energy consumed or regenerated while carrying out said handling operations 114.

Example 3: The computer system (100) of any example 2, wherein the amount of energy consumed or regenerated while carrying out said handling operations 114 is calculated as a function of the container-related data (110) comprising a weight of a container (30), a time or distance during which a container (30) is expected to be carried by the electric material handling machine (10), a time or distance during which the electric material handling machine (10) is expected to move towards or from a container (30), and optionally a height difference of a relocation of a container (30).

Example 4: The computer system (100) of any of examples 2-3, wherein the prioritization relates to respective energy consumption of the handling operations 114 being container lifting operations.

Example 5: The computer system (100) of example 4, wherein the prioritization involves, within acceptable values of a recovery time comprised in the battery attributes (112), assigning higher energy consuming container lifting operations to higher values of state of charge comprised in the battery attributes (112) compared to lower energy consuming container lifting operations.

Example 6: The computer system (100) of any of examples 2-5, wherein the processing circuitry (102) is configured to prioritize an energy regeneration of the handling operations 114 being container lowering operations.

Example 7: The computer system (100) of example 6, wherein the prioritization involves assigning higher energy regenerating container lowering operations to lower values of state of charge comprised in the battery attributes (112) compared to lower energy regenerating container lowering operations.

Example 8: The computer system (100) of any of examples 1-7, wherein the container-related data (110) further comprises an operation prioritization indicator configured to indicate prioritized container loads.

Example 9: The computer system (100) of any of examples 1-8, wherein the processing circuitry (102) is further configured to optimize the energy management data (116) based on an optimization property of the electric material handling machine (10).

Example 10: The computer system (100) of example 9, the optimization property being one or more of: a minimum energy consumption of the electric material handling machine (10), a number of said plurality of containers (30) moved or to be moved by the electric material handling machine (10), and a number of battery charging sequences that has been carried out by the electric material handling machine (10).

Example 11: The computer system (100) of any of examples 1-10, wherein the processing circuitry (102) is further configured to optimize the energy management data (116) based on geographical data of the site (20).

Example 12: The computer system (100) of any of examples 1-11, wherein the handling operations 114 cause a relocation of a container (30), or parts loaded therein, within the site (20).

Example 13: The computer system (100) of any of examples 1-12, wherein the battery attributes (112) depend on one or more of a weight of the electric material handling machine (10), an energy efficiency of the electric material handling machine (10), battery characteristics of a battery of the electric material handling machine (10), and idling data of the electric material handling machine (10).

Example 14: The computer system (100) of any of examples 1-13, wherein the processing circuitry (102) is configured to control the electric material handling machine (10) to carry out a handling operation based on the handling operation recommendation (118).

Example 15: The computer system (100) of any of examples 1-14, wherein the processing circuitry (102) is configured to control the electric material handling machine (10) to carry out an auxiliary handling machine operation based on the handling operation recommendation (118), the auxiliary handling machine operation being one or more of: a charging operation, a driving operation including an autonomous navigation operation, a collision avoidance operation and an ADAS operation, a climate control operation, a telematics operation, and a diagnostics operation.

Example 16: The computer system (100) of any of examples 1-15, being arranged in the electric material handling machine (10) and/or as a cloud-based resource configured to be in communication with the electric material handling machine.

Example 17: An electric material handling machine (10) comprising the computer system (100) of any of examples 1-16.

Example 18: A computer-implemented method (200) for providing a handling operation recommendation (118) for an electric material handling machine (10), comprising: obtaining (210), by processing circuitry (102) of a computer system (100), container-related data (110) of a plurality of containers (30) located at a site (20); obtaining (220), by the processing circuitry (102), battery attributes (112) of the electric material handling machine (10); determining (230), by the processing circuitry (102), handling operations 114 operable by the electric material handling machine (10) with respect to the plurality of containers (30) based on the container-related data (110); determining (240), by the processing circuitry (102), energy management data (116) based on the battery attributes (112) and the handling operations 114; and providing (250), by the processing circuitry (102), a handling operation recommendation (118) for the electric material handling machine (10) based on the energy management data (116).

Example 19: A computer program product comprising program code for performing, when executed by the processing circuitry (102), the method (200) of example 18.

Example 20: A non-transitory computer-readable storage medium comprising instructions, which when executed by the processing circuitry (102), cause the processing circuitry (102) to perform the method (200) of example 18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (100) for providing a handling operation recommendation (118) for an electric material handling machine (10), the computer system (100) comprising processing circuitry (102) configured to:
obtain container-related data (110) of a plurality of containers (30) located at a site (20);
obtain battery attributes (112) of the electric material handling machine (10);
determine handling operations (114) operable by the electric material handling machine (10) with respect to the plurality of containers (30) based on the container-related data (110);
determine energy management data (116) based on the battery attributes (112) and the handling operations (114); and
provide a handling operation recommendation (118) for the electric material handling machine (10) based on the energy management data (116).

2. The computer system (100) of claim 1, wherein the energy management data (116) comprises a prioritization of an order in which the handling operations (114) are to be carried out with respect to the battery attributes (112) based on an amount of energy consumed or regenerated while carrying out said handling operations (114).

3. The computer system (100) of claim 2, wherein the amount of energy consumed or regenerated while carrying out said handling operations (114) is calculated as a function of the container-related data (110) comprising a weight of a container (30), a time or distance during which a container (30) is expected to be carried by the electric material handling machine (10), a time or distance during which the electric material handling machine (10) is expected to move towards or from a container (30), and optionally a height difference of a relocation of a container (30).

4. The computer system (100) of any of claims 2-3, wherein the prioritization relates to respective energy consumption of the handling operations (114) being container lifting operations.

5. The computer system (100) of claim 4, wherein the prioritization involves, within acceptable values of a recovery time comprised in the battery attributes (112), assigning higher energy consuming container lifting operations to higher values of state of charge comprised in the battery attributes (112) compared to lower energy consuming container lifting operations.

6. The computer system (100) of any of claims 2-5, wherein the processing circuitry (102) is configured to prioritize an energy regeneration of the handling operations (114) being container lowering operations.

7. The computer system (100) of claim 6, wherein the prioritization involves assigning higher energy regenerating container lowering operations to lower values of state of charge comprised in the battery attributes (112) compared to lower energy regenerating container lowering operations.

8. The computer system (100) of any of claims 1-7, wherein the processing circuitry (102) is further configured to optimize the energy management data (116) based on an optimization property of the electric material handling machine (10), the optimization property being one or more of:
a minimum energy consumption of the electric material handling machine (10),
a number of said plurality of containers (30) moved or to be moved by the electric material handling machine (10), and
a number of battery charging sequences that has been carried out by the electric material handling machine (10).

9. The computer system (100) of any of claims 1-8, wherein the battery attributes (112) depend on one or more of a weight of the electric material handling machine (10), an energy efficiency of the electric material handling machine (10), battery characteristics of a battery of the electric material handling machine (10), and idling data of the electric material handling machine (10).

10. The computer system (100) of any of claims 1-9, wherein the processing circuitry (102) is configured to control the electric material handling machine (10) to carry out a handling operation based on the handling operation recommendation (118).

11. The computer system (100) of any of claims 1-10, wherein the processing circuitry (102) is configured to control the electric material handling machine (10) to carry out an auxiliary handling machine operation based on the handling operation recommendation (118), the auxiliary handling machine operation being one or more of:
a charging operation,
a driving operation including an autonomous navigation operation, a collision avoidance operation and an ADAS operation,
a climate control operation,
a telematics operation, and
a diagnostics operation.

12. An electric material handling machine (10) comprising the computer system (100) of any of claims 1-11.

13. A computer-implemented method (200) for providing a handling operation recommendation (118) for an electric material handling machine (10), comprising:
obtaining (210), by processing circuitry (102) of a computer system (100), container-related data (110) of a plurality of containers (30) located at a site (20);
obtaining (220), by the processing circuitry (102), battery attributes (112) of the electric material handling machine (10);
determining (230), by the processing circuitry (102), handling operations (114) operable by the electric material handling machine (10) with respect to the plurality of containers (30) based on the container-related data (110);
determining (240), by the processing circuitry (102), energy management data (116) based on the battery attributes (112) and the handling operations (114); and
providing (250), by the processing circuitry (102), a handling operation recommendation (118) for the electric material handling machine (10) based on the energy management data (116).

14. A computer program product comprising program code for performing, when executed by the processing circuitry (102), the method (200) of claim 13.

15. A non-transitory computer-readable storage medium comprising instructions, which when executed by the processing circuitry (102), cause the processing circuitry (102) to perform the method (200) of claim 13.

## Amended claims

### Amended claims in accordance with Rule 137(2) EPC.

1. A computer system (100) for providing a handling operation recommendation (118) for an electric material handling machine (10), the computer system (100) comprising processing circuitry (102) configured to:
obtain container-related data (110) of a plurality of containers (30) located at a site (20);
obtain battery attributes (112) of the electric material handling machine (10);
determine handling operations (114) operable by the electric material handling machine (10) with respect to the plurality of containers (30) based on the container-related data (110);
determine energy management data (116) based on the battery attributes (112) and the handling operations (114), the energy management data (116) comprising a prioritization of an order in which the handling operations (114) are to be carried out with respect to the battery attributes (112) based on an amount of energy consumed or regenerated while carrying out said handling operations (114); and
provide a handling operation recommendation (118) for the electric material handling machine (10) based on the energy management data (116).

2. The computer system (100) of claim 1, further comprising an estimation system configured to obtain location data of the electric material handling machine (10), wherein the amount of energy consumed or regenerated while carrying out said handling operations (114) is calculated as a function of the container-related data (110) comprising a weight of a container (30), a time or distance during which a container (30) is expected to be carried by the electric material handling machine (10), a time or distance during which the electric material handling machine (10) is expected to move towards or from a container (30), and optionally a height difference of a relocation of a container (30).

3. The computer system (100) of any of claims 1-2, wherein the prioritization relates to respective energy consumption of the handling operations (114) being container lifting operations.

4. The computer system (100) of claim 3, wherein the prioritization involves, within acceptable values of a recovery time comprised in the battery attributes (112), assigning higher energy consuming container lifting operations to higher values of state of charge comprised in the battery attributes (112) compared to lower energy consuming container lifting operations.

5. The computer system (100) of any of claims 1-4, wherein the processing circuitry (102) is configured to prioritize an energy regeneration of the handling operations (114) being container lowering operations.

6. The computer system (100) of claim 5, wherein the prioritization involves assigning higher energy regenerating container lowering operations to lower values of state of charge comprised in the battery attributes (112) compared to lower energy regenerating container lowering operations.

7. The computer system (100) of any of claims 1-6, wherein the processing circuitry (102) is further configured to optimize the energy management data (116) based on an optimization property of the electric material handling machine (10), the optimization property being one or more of:
a minimum energy consumption of the electric material handling machine (10),
a number of said plurality of containers (30) moved or to be moved by the electric material handling machine (10), and
a number of battery charging sequences that has been carried out by the electric material handling machine (10).

8. The computer system (100) of any of claims 1-7, wherein the battery attributes (112) depend on one or more of a weight of the electric material handling machine (10), an energy efficiency of the electric material handling machine (10), battery characteristics of a battery of the electric material handling machine (10), and idling data of the electric material handling machine (10).

9. The computer system (100) of any of claims 1-8, wherein the processing circuitry (102) is configured to control the electric material handling machine (10) to carry out a handling operation based on the handling operation recommendation (118).

10. The computer system (100) of any of claims 1-9, wherein the processing circuitry (102) is configured to control the electric material handling machine (10) to carry out an auxiliary handling machine operation based on the handling operation recommendation (118), the auxiliary handling machine operation being one or more of:
a charging operation,
a driving operation including an autonomous navigation operation, a collision avoidance operation and an ADAS operation,
a climate control operation,
a telematics operation, and
a diagnostics operation.

11. An electric material handling machine (10) comprising the computer system (100) of any of claims 1-10.

12. A computer-implemented method (200) for providing a handling operation recommendation (118) for an electric material handling machine (10), comprising:
obtaining (210), by processing circuitry (102) of a computer system (100), container-related data (110) of a plurality of containers (30) located at a site (20);
obtaining (220), by the processing circuitry (102), battery attributes (112) of the electric material handling machine (10);
determining (230), by the processing circuitry (102), handling operations (114) operable by the electric material handling machine (10) with respect to the plurality of containers (30) based on the container-related data (110);
determining (240), by the processing circuitry (102), energy management data (116) based on the battery attributes (112) and the handling operations (114), the energy management data (116) comprising a prioritization of an order in which the handling operations (114) are to be carried out with respect to the battery attributes (112) based on an amount of energy consumed or regenerated while carrying out said handling operations (114); and
providing (250), by the processing circuitry (102), a handling operation recommendation (118) for the electric material handling machine (10) based on the energy management data (116).

13. A computer program product comprising program code for performing, when executed by the processing circuitry (102), the method (200) of claim 12.

14. A non-transitory computer-readable storage medium comprising instructions, which when executed by the processing circuitry (102), cause the processing circuitry (102) to perform the method (200) of claim 12.
